# EUROPÄISCHE PATENTANMELDUNG

(11) **EP 1 120 845 A1**
(43) Veröffentlichungstag der Anmeldung: **01.08.2001**
(21) Anmeldenummer: 01810006.5
(22) Anmeldetag: 04.01.2001
(51) Int. Cl.: H01M 8/06, H01M 8/04

(54) **Brennstoffzellenbatterie und Reformer für flüssige Brennstoffe**

(30) Priorität: 25.01.2000 EP 00810065
(71) Anmelder: Sulzer Hexis AG, 8400 Winterthur (CH)
(72) Erfinder: Schuler, Alexander, Dr., 8484 Weisslingen (CH)
(74) Vertreter: Sulzer Management AG

(57) **Zusammenfassung**

Die Brennstoffzellenbatterie (1) für flüssige Brennstoffe weist folgende Komponenten auf: einen längs einer Achse (2a) und innerhalb einer Peripherie (2b) angeordneten Zellenstapel (2); einen Verteilkanal (21) auf der Stapelachse (2a), über den ein aufbereitetes Brenngas in Zellen (20) des Stapels (2) einspeisbar ist; Nachverbrennungsräume (22) an der Stapelperipherie (2b); ferner einen Hilfsbrenner (3) für einen Anfahrbetrieb. Eine Reaktionseinrichtung (3) steht in Verbindung mit dem Zellenstapel, die für die Aufbereitung des flüssigen Brennstoffes durch eine Reformierung mit partieller Oxidation zu einem CO und H₂ enthaltenden Brenngas vorgesehen ist. In die Reaktionseinrichtung ist ein Wärmeübertragungssystem (4) integriert, mittels dessen in einem stromliefernden Betrieb der Batterie (1) - unter Nutzung von heissem Abgas aus den Nachverbrennungsräumen - der flüssige Brennstoff verdampfbar sowie ein gasförmiger Sauerstoffträger aufheizbar ist. Über eine Einspeisestelle (6), die Teil des Wärmeübertragungssystems ist, lässt sich verdampfter Brennstoff mit aufgeheiztem Sauerstoffträger zur Bildung des aufbereiteten Brenngases in Kontakt bringen. Dieses Brenngas ist aus der Reaktionseinrichtung in den Verteilkanal des Zellenstapels einspeisbar.

## Beschreibung

Die Erfindung betrifft eine Brennstoffzellenbatterie für flüssige Brennstoffe gemäss Oberbegriff von Anspruch 1, ein Verfahren zum Betreiben sowie eine Verwendung der Batterie.

In einer Einrichtung mit Hochtemperatur-Brennstoffzellen, die beispielsweise aus der EP-A- 0 654 838 (= P.6612) bekannt ist, wird aus einem Methan enthaltenden Brenngas und Luft elektrische Energie erzeugt. In einem ersten Schritt wird das Brenngas zusammen mit dampfförmigem Wasser H₂O und unter einer Wärmezufuhr bei rund 800°C katalytisch zu einem Kohlenmonoxid CO und Wasserstoff H₂ enthaltenden Brenngas aufbereitet (reformiert). Mit diesem aufbereiteten Brenngas lassen sich in einem zweiten Schritt stromliefernde Prozesse in den Brennstoffzellen bei Betriebstemperaturen von 850 bis 900°C durchführen. Abwärme, die bei den stromliefernden Prozessen und bei einer Nachverbrennung entsteht, wird bei dem Aufbereitungsprozess, der Reformierung, genutzt. Es ist auch möglich, einen flüssigen Brennstoff, der beispielsweise ein Kohlenwasserstoff CₙHₘ, mit n > 5 und m = 2n + 2, oder ein Gemisch solcher Kohlenwasserstoffe ist, zu einem CO und H₂ enthaltenden Brenngas aufzubereiten und dieses für den Betrieb der bekannten Brennstoffzellen zu verwenden. Der Brennstoff wird vor der Reformierung verdampft, wobei mit Vorteil auch die genannte Abwärme genutzt wird. Die Verwendung eines flüssigen Brennstoffes für den Betrieb einer Brennstoffzellenbatterie ist in einer stationären Anlage möglich; sie ist besonders vorteilhaft in einer mobilen Anlage, beispielsweise einem Auto, in welcher der Brennstoff in einem Tank mitgeführt werden kann. Für einen mobilen Einsatz ist es aus wirtschaftlichen Gründen notwendig, dass für das bei der Reformierung benötigte H₂O, das bei bekannten Anlagen als entmineralisiertes Wasser zur Verfügung gestellt werden muss, nicht erforderlich ist.

Aufgabe der Erfindung ist es, ein Brennstoffzellenbatterie für flüssige Brennstoffe zu schaffen, die in einer mobilen Anlage verwendbar ist und bei der für die Aufbereitung eines Brenngases kein Wasser erforderlich ist. Diese Aufgabe wird durch die im Anspruch 1 definierte Batterie gelöst.

Die Brennstoffzellenbatterie für flüssige Brennstoffe weist folgende Komponenten auf: einen längs einer Achse und innerhalb einer Peripherie angeordneten Zellenstapel; einen Verteilkanal auf der Stapelachse, über den ein aufbereitetes Brenngas in Zellen des Stapels einspeisbar ist; Nachverbrennungsräume an der Stapelperipherie; ferner einen Hilfsbrenner für einen Anfahrbetrieb. Eine Reaktionseinrichtung steht in Verbindung mit dem Zellenstapel, die für die Aufbereitung des flüssigen Brennstoffes durch eine Reformierung mit partieller Oxidation zu einem CO und H₂ enthaltenden Brenngas vorgesehen ist. In die Reaktionseinrichtung ist ein Wärmeübertragungssystem integriert, mittels dessen in einem stromliefernden Betrieb der Batterie - unter Nutzung von heissem Abgas aus den Nachverbrennungsräumen - der flüssige Brennstoff verdampfbar sowie ein gasförmiger Sauerstoffträger aufheizbar ist. Über eine Einspeisestelle, die Teil des Wärmeübertragungssystems ist, lässt sich verdampfter Brennstoff mit aufgeheiztem Sauerstoffträger zur Bildung des aufbereiteten Brenngases in Kontakt bringen. Dieses Brenngas ist aus der Reaktionseinrichtung in den Verteilkanal des Zellenstapels einspeisbar.

Die abhängigen Ansprüche 2 bis 9 betreffen vorteilhafte Ausführungsformen der erfindungsgemässen Batterie. Ein Verfahren und Verwendungsmöglichkeiten der erfindungsgemässen Batterie sind Gegenstand des Anspruchs 10 bzw. 11.

Nachfolgend wird die Erfindung anhand der Zeichnungen erläutert. Es zeigen:
- Fig. 1: ein erstes Ausführungsbeispiel der erfindungsgemässen Brennstoffzellenbatterie,
- Fig. 2: eine Draufsicht auf die Batterie der Fig. 1,
- Fig. 3: ein zweites Ausführungsbeispiel,
- Fig. 4: ein Detail zu einem dritten Ausführungsbeispiel
- Fig. 5: eine schematische Darstellung einer Anlage mit der erfindungsgemässen Brennstoffzellen-Batterie und
- Fig. 6: eine alternative Lösung für Einbauten zur Durchführung der partiellen Oxidation.

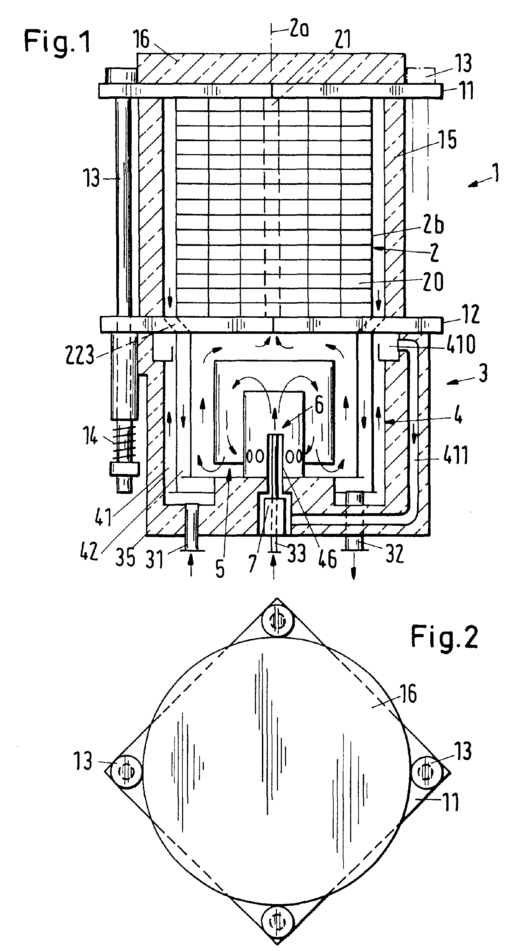

Für eine Brennstoffzellenbatterie 1 gemäss der Erfindung, die für eine Stromerzeugung mit flüssigen Brennstoffen verwendet werden kann, ist ein erstes Ausführungsbeispiel in Fig. 1 dargestellt; eine Draufsicht auf diese Batterie 1 zeigt Fig. 2. Die Batterie 1 umfasst Brennstoffzellen 20, die längs einer Achse 2a und innerhalb einer Peripherie 2b einen Stapel 2 bilden. Ein Verteilkanal 21, über den ein aufbereitetes Brenngas in die Zellen 20 einspeisbar ist, liegt auf der Stapelachse 2a. Eine Hülle 15 enthält nicht dargestellte Luftzuführungen, über die ein gasförmiger Sauerstoffträger in die Zellen 20 einspeisbar ist. Das bei den stromliefernden Prozessen nicht vollständig nutzbare Brenngas wird mit dem Sauerstoffträger, der die Zellen 20 passiert hat, in einem oder mehreren Nachverbrennungsräumen 22 an der Stapelperipherie 2b vollständig verbrannt.

Der Zellenstapel 2 ist zwischen Platten 11 und 12 angeordnet, die als elektrische Pole der Batterie 1 ausgebildet sein können. Mit Spannstangen 13 und Federn 14 wird für den nötigen Anpressdruck zwischen aufeinander geschichteten Elementen der Zellen 20 gesorgt. Die Spannstangen 13 sind in einer Randregion der Batterie 1 angeordnet, wo die Temperatur relativ niedrig ist. Eine Wärmedämmung 16 deckt die Platte 11 weitgehend ab.

Fluchtend zur Stapelachse 2a und am Zellenstapel 2 anliegend ist eine Reaktionseinrichtung 3 angeordnet. In dieser wird für die Aufbereitung des flüssigen Brennstoffes eine Reformierung mit partieller Oxidation durchgeführt. Dabei entsteht ein CO und H₂ enthaltendes Brenngas, ohne dass zu dieser Reformierung eine Zuführung von Wasser notwendig ist.

In die Reaktionseinrichtung 3 ist ein Wärmeübertragungssystem 4 integriert, das sich innerhalb einer wärmedämmenden Hülle 35 befindet. Während des stromliefernden Betriebs der Batterie lässt sich das heisse Abgas aus den Nachverbrennungsräumen 22 nutzen, einerseits zum Verdampfen des flüssigen Brennstoffs und andererseits zum Aufheizen eines gasförmigen Sauerstoffträgers. Über eine Einspeisestelle 6, die Teil des Wärmeübertragungssystems 4 ist, lässt sich verdampfter Brennstoff mit aufgeheiztem Sauerstoffträger in Kontakt bringen, so dass die Reformierung mit partieller Oxidation stattfinden kann. Nach der Bildung des aufbereiteten Brenngases wird dieses aus der Reaktionseinrichtung 3 in den Verteilkanal 21 des Zellenstapels 2 eingespiesen.

Im Wärmeübertragungssystem 4 findet eine indirekte Wärmeübertragung zwischen Abgas und Sauerstoffträger statt, wobei diese beiden Medien im Gegenstrom durch zwei ringspaltförmige Teilräume 41 und 42 geleitet werden. Die Teilräume 41 und 42 sind weitgehend in Fortsetzung zur Stapelperipherie 2b angeordnet. Der Sauerstoffträger gelangt über einen Eintrittsstutzen in das Wärmeübertragungssystem 4, dort in den Teilraum 41, von dort aus in einen Sammelkanal 410 und von dort aus über eine Verbindungsleitung 411 in die Einspeisestelle 6. Das Abgas tritt aus den Nachverbrennungsräumen 22 über Bohrungen 223 in der Platte 12 in den Teilraum 42 und verlässt das Wärmeübertragungssystem 4 über einen Austrittsstutzen 32.

In einem zentralen Bereich der Reaktionseinrichtung 3 bilden koaxiale Zufuhrrohre für den Brennstoff und den vorgewärmten Sauerstoffträger die Einspeisestelle 6, wobei die Zufuhrrohre durch ein zentrales Rohr 33 für den Brennstoff und ein äusseres Rohr 46 für den Sauerstoffträger gebildet sind. Diese Zufuhrrohre 33, 46 sind so ausgelegt, dass im stromliefernden Betrieb eine ausreichende Menge an Wärme aus dem vorgewärmten Sauerstoffträger in den Brennstoff übertragen wird, so dass dieser verdampft.

Die Reaktionseinrichtung 3 ist mit Einbauten 5 und einem ausreichend grossen Volumen ausgestattet, so dass sich Verweilzeiten für die Durchführung der partiellen Oxidation ergeben, für die der überwiegende Anteil des im Brennstoff enthaltenen Kohlenstoffs zu CO oder CO₂ reagiert. Zweck der Einbauten 5 ist eine gute Durchmischung der Reaktionspartner und eine hohe Rezirkulation, so dass sich eine gleichmässige Reaktionsdichte ausbildet. Dadurch wird die Temperaturverteilung ebenfalls gleichmässig, und eine Russbildung wird minimiert.

An der Zuspeiseleitung 33 für den flüssigen Brennstoff ist vorzugsweise eine elektrische Heizung 7 vorgesehen, die bei einem Anfahren des Batteriebetriebs für eine Verdampfung des Brennstoffs verwendbar ist. Während des Anfahrens kann die Reaktionseinrichtung 3 als Hilfsbrenner verwendet werden, wobei der Sauerstoffträger in einem Überschuss zugeführt wird, so dass der Brennstoff vollständig verbrannt wird. Die heissen Verbrennungsgase können dann zur Aufheizung der Zellen 20 verwendet werden.

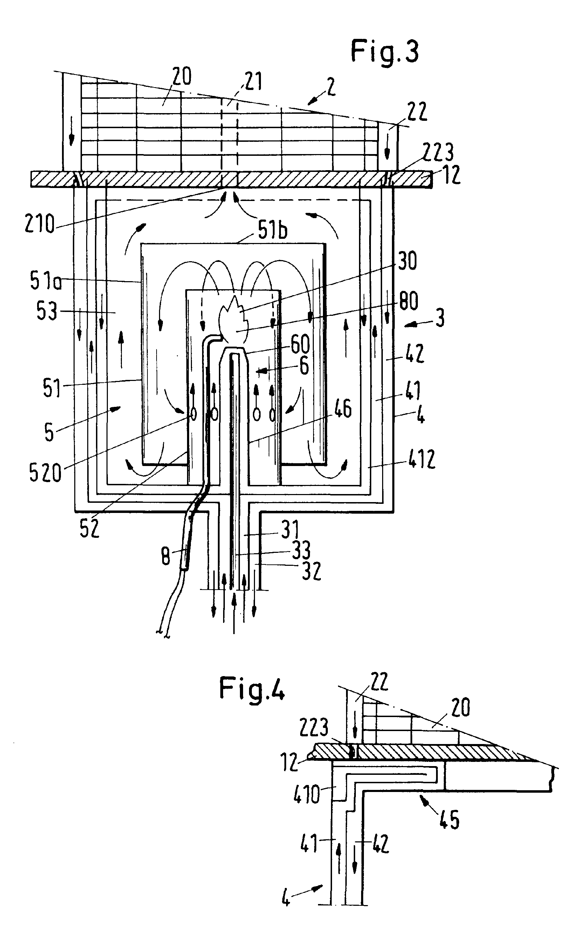

Fig. 3 zeigt ein zweites Ausführungsbeispiel, das im wesentlichen die gleichen Einbauten 5 wie das erste Ausführungsbeispiel hat. Diese Einbauten 5 sind durch zwei koaxiale, um die Einspeisestelle 6 angeordnete Zylinder 51 und 52 gebildet. Der äussere Zylinder 51 weist eine Mantelfläche 51a sowie eine Stirnfläche 51b auf, die geschlossen sind und die eine Umlenkung der aus der Einspeisestelle 6 austretenden Gasströme bewirkt. Der andere, innerhalb dem ersten Zylinder 51 angeordnete Zylinder 52 besteht aus einer Mantelfläche mit Durchbrüchen 520. Die genannten Gasströme führen Impuls mit sich, mit dem eine schlaufenartige Umwälzströmung im ersten Zylinder 51 angetrieben wird.

Eine Zündeinrichtung 7 mit Zündelektroden 70 ist bei der Einspeisestelle 6 angeordnet. Mit dieser kann beim Anfahren der Batterie eine Verbrennung oder beim Starten der partiellen Oxidation die Reaktion gezündet werden, was als Flamme 80 angedeutet ist.

Das Wärmeübertragungssystem 4 unterscheidet sich von jenem des ersten Ausführungsbeispiels: Der Strom der heissen Abgase aus den Nachverbrennungsräumen 22 wird in einem äusseren, ringspaltförmigen Teilraum 42 geführt. Konzentrisch zu einem Rohr 32, durch den das Abgas aus der Reaktionseinrichtung 3 abgeführt wird, tritt der Sauerstoffträger durch ein Rohr 31 in das Wärmeübertragungssystem 4 ein, wo es im Gegenstrom zum Abgas durch einen inneren, ringspaltförmigen Teilraum 41 geleitet wird. Über einen zweiten ringspaltförmigen Teilraum 412 wird der aufgeheizte Sauerstoffträger zum Rohr 46 der Einspeisestelle 6 geleitet. Das Austrittsende 60 des Rohrs 46 ist düsenartig ausgebildet, so dass zur Antreibung der Umwälzströmung im Reaktionsraum genügend Impuls übertragen wird.

Fig. 4 zeigt ein Detail zu einem dritten Ausführungsbeispiel, welches das Wärmeübertragungssystem 4 betrifft und das eine Variante zum Wärmeübertragungssystem 4 des ersten Ausführungsbeispiels ist: Bei den Zuführbohrungen 223 für das Abgas sind radiale Spalträume 45 im Anschluss an die Ringspalträume 41 (Sauerstoffträger) und 42 (Abgas) angeordnet, über die eine Wärmeübertragung vom Abgas auf den Sauerstoffträger erfolgt.

Die erfindungsgemässe Batterie 1 ist für eine elektrische Leistung von mehr als 1 kW und weniger als 5 kW vorgesehen. Die Einbauten 5 sind grössenordnungsmässig so ausgelegt, dass der innere Zylinder 52 einen Durchmesser von 5 cm und der äussere Zylinder 51 einen Durchmesser von 10 cm haben. Um den äusseren Zylinder 51 ist ein Ringspalt 53 mit einer Spaltbreite von 2 cm vorgesehen, durch den das aufbereitete Brenngas zu einer Eintrittsstelle 210 des Verteilkanals 21 strömen kann.

Es wird für die Anteile des Sauerstoffträgers und Brennstoffs bei der Reformierung mit partieller Oxidation ein Verhältnis gewählt, für das mindestens 50%, vorzugsweise 80 - 90% des im Brennstoff enthaltenen Kohlenstoffs zu CO oxidiert wird. Der Rest des Kohlenstoffs wird zu CO₂ oxidiert.

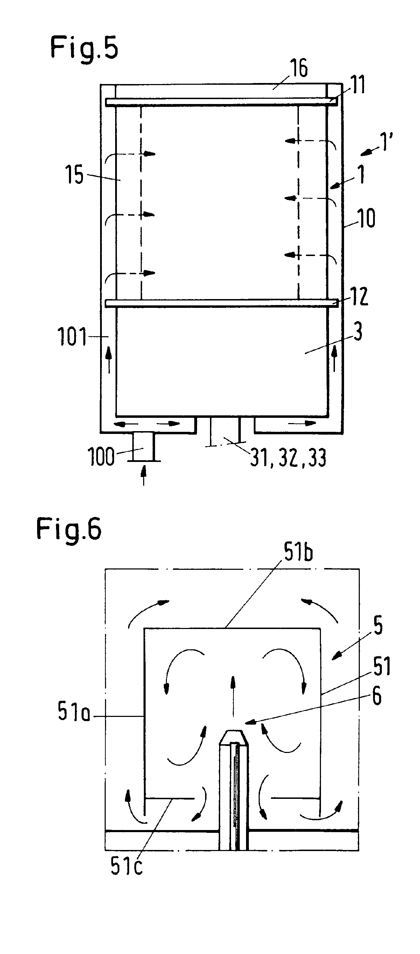

Die Fig. 5 zeigt eine schematische Darstellung einer Anlage 1' mit der erfindungsgemässen Brennstoffzellenbatterie 1, die in einem Behälter 10 angeordnet ist. An der Peripherie der Reaktionseinrichtung 3, die durch das nicht dargestellte Wärmetauschersystem 4 gebildet wird, ist ein ringspaltförmiger Teilraum 101 vorgesehen, durch den Luft oder ein anderer Sauerstoffträger leitbar ist, der für die stromliefernden Reaktionen benötigt wird. Die Luft wird über einen Stutzen 100 des Behälters 10 eingespeist. Sie gelangt nach Durchströmen des Teilraums 101 über die wärmedämmende Hülle 15 in die Zellen 20 des Stapels 2. Durch diese Zuführung von frischer Luft bleibt die Oberfläche der Batterie 1 auf einer niedrigen Temperatur.

In Fig. 6 ist eine alternative Lösung für die Einbauten 5 zur Durchführung der partiellen Oxidation dargestellt. Im Vergleich zu den Einbauten 5 der Ausführungsformen gemäss den Figuren 1 und 3 fehlt hier der innere Zylinder 52. Stattdessen ist an der unteren Stirnfläche des Zylinders 51 eine ringförmige Umlenkwand 51c angeordnet, die umlenkend auf die Gasströmung einwirkt, so dass sich eine durch Pfeile angedeutete Schlaufenströmung einstellt.

Die erfindungsgemässen Brennstoffzellenbatterie 1 lässt sich in einer stationären oder in einer mobilen Anlage einsetzen.

## Patentansprüche

1. Brennstoffzellenbatterie (1) für flüssige Brennstoffe, mit einem längs einer Achse (2a) und innerhalb einer Peripherie (2b) angeordneten Zellenstapel (2), mit einem Verteilkanal (21) auf der Stapelachse (2a), über den ein aufbereitetes Brenngas in Zellen (20) des Stapels (2) einspeisbar ist, mit Nachverbrennungsräumen (22) an der Stapelperipherie (2b) und mit einem Hilfsbrenner (3) für einen Anfahrbetrieb,
dadurch gekennzeichnet, dass eine Reaktionseinrichtung (3) in Verbindung mit dem Zellenstapel steht, die für die Aufbereitung des flüssigen Brennstoffes durch eine Reformierung mit partieller Oxidation zu einem CO und H₂ enthaltenden Brenngas vorgesehen ist und in die ein Wärmeübertragungssystem (4) integriert ist, mittels dessen in einem stromliefernden Betrieb der Batterie (1) - unter Nutzung von heissem Abgas aus den Nachverbrennungsräumen - der flüssige Brennstoff verdampfbar ist sowie ein gasförmiger Sauerstoffträger aufheizbar ist, dass eine Einspeisestelle (6) Teil des Wärmeübertragungssystems ist, dass über diese Einspeisestelle verdampfter Brennstoff mit aufgeheiztem Sauerstoffträger zur Bildung des aufbereiteten Brenngases zusammenführbar sind und dass dieses Brenngas aus der Reaktionseinrichtung in den Verteilkanal des Zellenstapels einspeisbar ist.

2. Brennstoffzellenbatterie nach Anspruch 1, dadurch gekennzeichnet, dass die Reaktionseinrichtung (3) fluchtend zur Stapelachse (2a) und am Zellenstapel (2) anliegend angeordnet ist und dass sie als Hilfsbrenner verwendet werden kann.

3. Brennstoffzellenbatterie nach Anspruch 1 oder 2, dadurch gekennzeichnet, dass während des stromliefernden Betriebs im Wärmeübertragungssystem (4) eine indirekte Wärmeübertragung zwischen Abgas und Sauerstoffträger stattfindet und dass zu dieser Wärmeübertragung das Abgas und der Sauerstoffträger durch mindestens zwei ringspaltförmige Teilräume (41, 42) leitbar sind, die weitgehend in Fortsetzung zur Stapelperipherie (2b) angeordnet sind.

4. Brennstoffzellenbatterie nach einem der Ansprüche 1 bis 3, dadurch gekennzeichnet, dass in einem zentralen Bereich der Reaktionseinrichtung (3) koaxiale Zufuhrrohre (33, 46) für den Brennstoff und den vorgewärmten Sauerstoffträger die Einspeisestelle (6) bilden, wobei insbesondere der Brennstoff durch ein zentrales Zufuhrrohr (33) einspeisbar ist, und dass die Zufuhrrohre so ausgelegt sind, dass im stromliefernden Betrieb für den Brennstoff eine ausreichende Menge an Wärme für dessen Verdampfung aus dem vorgewärmten Sauerstoffträger aufnehmbar ist.

5. Brennstoffzellenbatterie nach einem der Ansprüche 1 bis 4, dadurch gekennzeichnet, dass die Reaktionseinrichtung (3) mit Einbauten (5) zur Ausbildung einer Schlaufenströmung ausgestattet ist und ein ausreichend grosses Volumen aufweist, so dass sich Verweilzeiten für die Durchführung der partiellen Oxidation ergeben, für die der überwiegende Anteil des im Brennstoff enthaltenen Kohlenstoffs zu CO oder CO₂ reagiert.

6. Brennstoffzellenbatterie nach Anspruch 5, dadurch gekennzeichnet, dass die Einbauten (5) koaxiale, um die Einspeisestelle (6) angeordnete Zylinder (51, 52) sind, dass der eine Zylinder (51) eine Mantel- sowie eine Stirnfläche (51a, 51b) aufweist, die geschlossen sind und die eine Umlenkung der aus der Einspeisestelle austretenden Gasströme bewirken, und dass der andere, innerhalb dem ersten Zylinder angeordnete Zylinder (52) aus einer Mantelfläche mit Durchbrüchen (520) besteht, aufgrund der die genannten Gasströme eine schlaufenartige Umwälzströmung im ersten Zylinder (51) bewirken, wobei der innere Zylinder (52) durch eine ringförmige Wand (51 c) ersetzt sein kann, die am unteren Rand der Mantelfläche (51 a) des ersten Zylinders und im Innenbereich dieses Randes angeordnet ist.

7. Brennstoffzellenbatterie nach Anspruch 6, dadurch gekennzeichnet, dass sie für eine elektrische Leistung von mehr als 1 kW und weniger als 5 kW vorgesehen ist und dass die Einbauten grössenordnungsmässig so ausgelegt sind, dass der innere Zylinder (52) einen Durchmesser von 5 cm, der äussere Zylinder (51) einen Durchmesser von 10 cm haben und dass um den äusseren Zylinder ein Ringspalt (53) mit einer Spaltbreite von 2 cm vorgesehen ist, durch den das aufbereitete Brenngas zu einer Eintrittsstelle (210) des Verteilkanals (21) strömen kann.

8. Brennstoffzellenbatterie nach einem der Ansprüche 1 bis 7, dadurch gekennzeichnet, dass an einer Zuspeiseleitung (33) für den flüssigen Brennstoff vorzugsweise eine elektrische Heizung (7) vorgesehen ist, die bei einem Anfahren des stromliefernden Betriebs für eine Verdampfung des Brennstoffs verwendbar ist, und dass eine Zündelektrode (8, 80) bei der Einspeisestelle (6) angeordnet ist, mit der eine Verbrennung im Hilfsbrenner oder die partielle Oxidation zum Starten gezündet werden kann.

9. Brennstoffzellenbatterie nach einem der Ansprüche 1 bis 8, dadurch gekennzeichnet, dass an einer Peripherie des Wärmetauschersystems (4) ein ringspaltförmiger Teilraum (101) vorgesehen ist, durch den Luft oder ein anderer Sauerstoffträger leitbar ist, der für die stromliefernden Reaktionen benötigt wird.

10. Verfahren zum Betreiben einer Brennstoffzellenbatterie (1) gemäss einem der Ansprüchen 1 bis 9, dadurch gekennzeichnet, dass bei der Reaktion zwischen Sauerstoffträger und Brennstoff für deren Anteile ein Verhältnis vorgesehen ist, für das mindestens 50%, vorzugsweise 80 - 90% des im Brennstoff enthaltenen Kohlenstoffs zu CO - der Rest zu CO₂ - oxidiert wird.

11. Verwendung einer Brennstoffzellenbatterie (1) gemäss einem der Ansprüchen 1 bis 9 in einer stationären oder in einer mobilen Anlage, wobei als Brennstoff ein Kohlenwasserstoff CₙHₘ, mit n > 5 und beispielsweise m = 2n + 2, oder ein Gemisch solcher Kohlenwasserstoffe verwendet wird.
